# EUROPÄISCHE PATENTANMELDUNG

(11) **EP 2 444 749 A2**
(43) Veröffentlichungstag der Anmeldung: **25.04.2012**
(21) Anmeldenummer: 11008159.3
(22) Anmeldetag: 08.10.2011
(51) Int. Cl.: F24D 13/04

(54) **Vorrichtung zum Entlüften eines drucklosen Flüssigkeitskreislaufes**

(30) Priorität: 13.10.2010 DE 202010014264 U
(71) Anmelder: PAW GmbH & Co. KG, 31789 Hameln (DE)
(72) Erfinder: Pommerening, Rüdiger, 31787 Hameln (DE)
(74) Vertreter: Jabbusch, Matthias

(57) **Zusammenfassung**

Bei einer Vorrichtung zum Entlüften eines drucklosen Flüssigkeitskreislaufes, insbesondere eines Mediumkreislaufes für eine solarthermische Anlage, ist vorgesehen, dass sie wenigstens einen in den Mediumkreislauf eingesetzten Behälterkörper hat, dass der Behälterkörper zumindest eine Entlüftungsöffnung aufweist und dass dieser Entlüftungsöffnung ein an die Entlüftungsöffnung anlegbarer Schwimmkörper zugeordnet ist.

## Beschreibung

Die Erfindung betrifft eine Vorrichtung zum Entlüften eines drucklosen Flüssigkeitskreislaufes, insbesondere eines Mediumkreislaufes für eine solarthermische Anlage.

Bei solarthermischen Anlagen sind häufig Mediumkreisläufe vorgesehen. Ein Mediumkreislauf kann beispielsweise von einem Kollektor zum Auffangen der Sonnenenergie bis zu einem Wärmetauscher oder bis zu einer durch einen Speicher für ein Nutzmedium geführten Wendel verlaufen. Kollektor und Wärmetauscher bzw. Wendel sind mit Leitungsrohren verbunden, in diesen Leitungsrohren wird ein Medium, beispielsweise ein Wasser-Glykol-Gemisch geführt.

Neben druckbelasteten Medienkreisläufen für solarthermische Anlagen sind auch drucklose Kreisläufe bekannt. Hier wird das beispielsweise im Primärkreislauf angeordnete Wasser-Glykol-Gemisch bei Nichtinbetriebnahme der solarthermischen Anlage aus dem Kreislauf herausgenommen und beispielsweise in einem Sammelbehälter gesammelt. Wird die solarthermische Anlage wieder in Betrieb genommen, wird mit Hilfe einer Pumpe das Medium in den Kreislauf eingebracht, im Kreislauf angeordnete Luft ist dann aus dem Kreislauf herauszuführen. Dazu dienen gattungsgemäße Vorrichtungen zum Entlüften. Im einfachsten Fall sind diese Vorrichtungen als Entlüftungsventile ausgebildet.

Der Erfindung liegt die Aufgabe zu Grunde, eine Vorrichtung der eingangs genannten Gattung aufzuzeigen, mit der eine möglichst schnelle Entlüftung eines Mediumkreislaufes ermöglicht ist.

Diese Aufgabe ist erfindungsgemäß dadurch gelöst, dass die Vorrichtung wenigstens einen in den Mediumkreislauf eingesetzten Behälterkörper hat, dass der Behälterkörper zumindest eine Entlüftungsöffnung aufweist und dass dieser Entlüftungsöffnung ein an die Entlüftungsöffnung anlegbarer Schwimmkörper zugeordnet ist.

Bei der erfindungsgemäßen Vorrichtung ist ein Behälterkörper vorgesehen. Dieser Behälterkörper hat ein gewisses Volumen, in das im Medienkreislauf angeordnete Flüssigkeit eintreten kann. Dabei mitgeführte Luft wird gleichfalls in den Behälterkörper eingeführt, aufgrund ihres geringeren spezifischen Gewichtes kann die Luft im Behälterkörper aufsteigen und zu der Entlüftungsöffnung geführt werden. Die Entlüftungsöffnung ist daher vorzugsweise in einem oberen Bereich des Behälterkörpers angeordnet.

Erfindungsgemäß ist der Entlüftungsöffnung ein Schwimmkörper zugeordnet. Dieser Schwimmkörper kann sich an die Entlüftungsöffnung anlegen, beispielsweise wenn der Behälterkörper vollständig mit dem flüssigen Medium des Mediumkreislaufes gefüllt ist. Befindet sich Luft im Behälterkörper, ist ein Aufschwimmen des Schwimmkörpers nicht mehr gegeben, er kann sich von der Entlüftungsöffnung entfernen. Die Entlüftungsöffnung ist dazu vorzugsweise oberhalb einer Aufnahme für den Schwimmkörper angeordnet. Mit eintretender Flüssigkeit schwimmt der Schwimmkörper auf und legt sich an die Entlüftungsöffnung an. Damit ist ein Verschluss des Behälterkörpers gegeben, so dass keine Flüssigkeit aus dem Behälterkörper austreten kann. Trifft Luft im Behälterkörper ein, fällt der Schwimmkörper ohne weiteres herunter und die Entlüftungsöffnung ist frei gegeben.

Der Schwimmkörper ist vorzugsweise kugelförmig ausgebildet, so kann er in jeder Dreh- bzw. Kipplage an die Entlüftungsöffnung angelegt werden. Vorzugsweise wird der Schwimmkörper aus einem elastischen Material ausgebildet, dadurch sind Dichtungseigenschaften beim Anlegen an die Entlüftungsöffnung gegeben.

Nach einer nächsten Weiterbildung der Erfindung ist vorgesehen, dass in das Innere des Behälterkörpers flächige Prallabschnitte vorstehen, welche Verengungen für die Flüssigkeit ausbilden. In das Innere des Behälterkörpers eingeführte Flüssigkeit prallt gegen diese Prallabschnitte. Dabei wird die Flüssigkeit abgelenkt, es findet eine Verengung ihres Fließweges statt. Das Ergebnis sind Verwirbelungen der Flüssigkeit, die dazu führen, dass mit der Flüssigkeit mitgeführte Luft aus dieser herausgeschleudert wird. Die Prallabschnitte unterstützen somit die Trennung von Flüssigkeit und Luft für die Entlüftung. Ein Prallabschnitt kann dabei zudem an der Ausbildung der Aufnahme für den Schwimmkörper beteiligt sein.

Nach einer nächsten Weiterbildung der Erfindung ist vorgesehen, dass an die Entlüftungsöffnung ein Leitungsabschnitt angesetzt ist. Mit diesem Leitungsabschnitt kann austretende Luft zielgerichtet abgeführt werden, beispielsweise in den Behälter für die Aufnahme der Flüssigkeit aus dem Mediumkreislauf. Dadurch ist erreicht, dass mit der Luft mitgeführte Flüssigkeitsmengen zurück in den Kreislauf geführt werden.

Über den erfindungsgemäß vorgesehenen Behälterkörper mit Entlüftungsöffnung kann eine schnelle Entlüftung erfolgen. Vorteilhaft ist verhindert, dass aus dem Kreislauf zu entfernende Luft durch Abschnitte des Mediumkreislaufes, beispielsweise durch eine in einem Speicher für Nutzmedien verlegte Wendel zu führen ist. Das Führen der Luft durch diese Wendel verursacht nämlich laute Geräusche, die einer Anordnung eines derartigen Speichers in Küchen- bzw. Wohnbereichen entgegenstehen.

Ein Ausführungsbeispiel der Erfindung, aus dem sich weitere erfinderische Merkmale ergeben, ist in der Zeichnung dargestellt. Es zeigen:
- Fig. 1:: eine schematische Darstellung eines Mediumkreislaufes für eine solarthermische Anlage und
- Fig. 2:: eine maßstäblich vergrößerte Seitenansicht von Bauteilen des Mediumkreislaufes nach Fig. 1

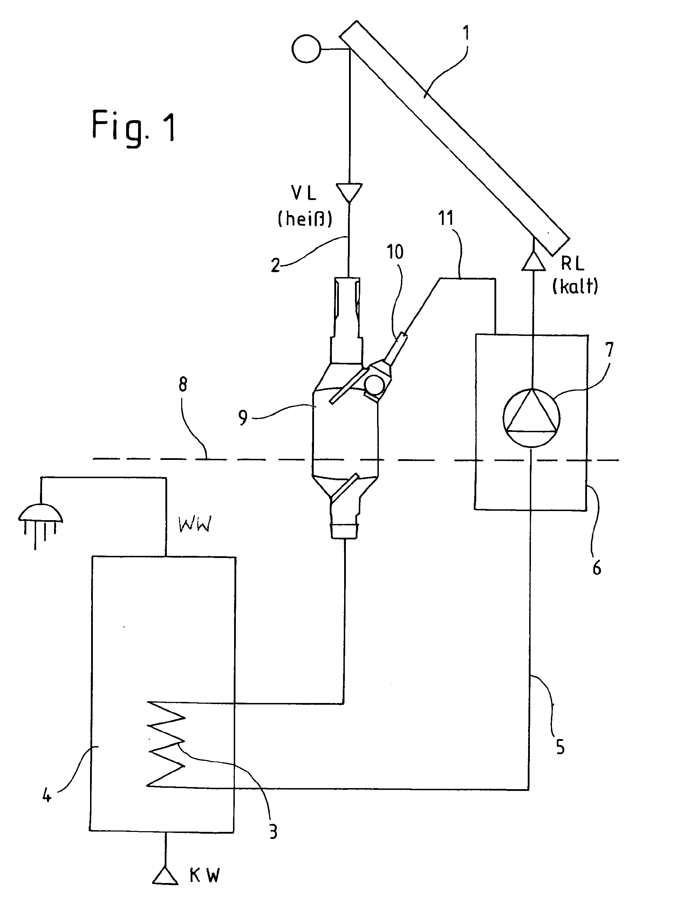

Der Mediumkreislauf in Fig. 1 umfasst einen Sonnenkollektor 1 zur Erwärmung eines im Mediumkreislauf geführten Mediums durch Sonneneinstrahlung. Das erwärmte Medium wird über eine Vorlaufleitung 2 des Kreislaufes zu einer Wendel 3 geführt, welche in einem Speicher 4 für ein Nutzmedium angeordnet ist. Die Rücklaufleitung 5 führt von der Wendel 3 durch einen Sammelbehälter 6 für das Medium des Kreislaufes zurück zum Sonnenkollektor 1. Dem Sammelbehälter 6 ist dabei eine Pumpe 7 zur Förderung des Mediums zugeordnet.

Die solarthermische Anlage ist ein offenes, druckloses System. Der Sammelbehälter 6 ist daher nicht vollständig mit dem flüssigen Medium gefüllt, oberhalb des Flüssigkeitsspiegels 8 verbleibt ein Luftraum. Wenn die solarthermische Anlage in Betrieb genommen wird, wird der Sammelbehälter 6 entleert, indem Medium mit der Pumpe 7 in den Kreislauf gepumpt wird. Vor diesem Pumpvorgang im Kreislauf vorhandene Luft wird durch die Flüssigkeit verdrängt.

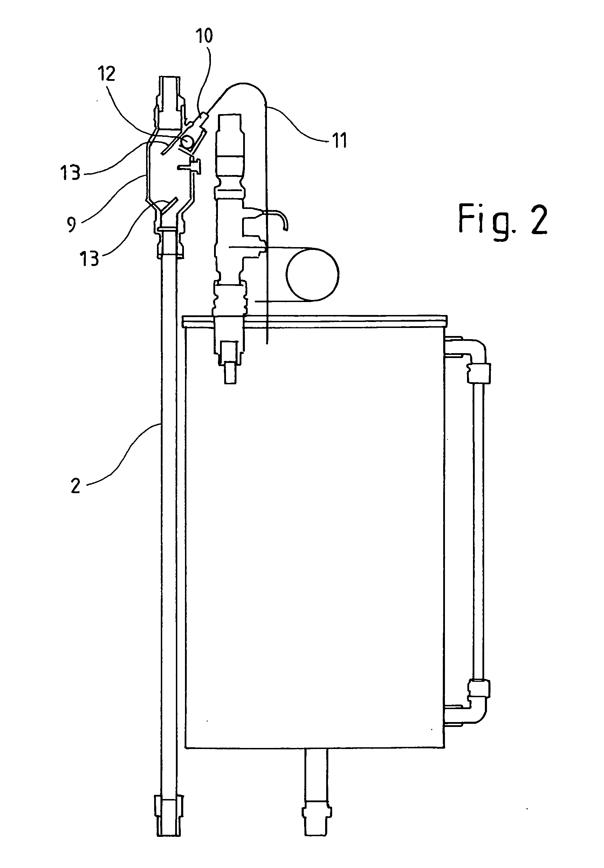

In die Vorlaufleitung 2 ist die erfindungsgemäße Vorrichtung eingesetzt. Sie weist einen in Fig. 2 dargestellten Behälterkörper 9 auf, der in die Vorlaufleitung 2 eingesetzt ist. Der Behälterkörper 9 ist in einem oberen Abschnitt mit einer Entlüftungsöffnung 10 ausgerüstet. An diese Entlüftungsöffnung 10 ist ein Leitungsabschnitt 11 angesetzt, der in den Vorratsbehälter 6 einmündet.

Der Entlüftungsöffnung 10 ist ein Schwimmkörper 12 zugeordnet. Der Schwimmkörper 12 wird im Behälterkörper 9 in einer Aufnahme 14 unterhalb der Entlüftungsöffnung 10 gehalten, bei Eintritt der Flüssigkeit in den Behälterkörper 9 schwimmt der Schwimmkörper 12 auf und legt sich an die Entlüftungsöffnung 10 an. Der Schwimmkörper 12 hat dabei eine Kugelform, er ist vorzugsweise aus einem elastischen Material gefertigt.

In das Innere des Behälterkörpers 9 stehen flächige Prallabschnitte 13 vor.

## Patentansprüche

1. Vorrichtung zum Entlüften eines drucklosen Flüssigkeitskreislaufes, insbesondere eines Mediumkreislaufes für eine solarthermische Anlage, **dadurch gekennzeichnet,**
**dass** sie wenigstens einen in den Mediumkreislauf eingesetzten Behälterkörper (9) hat,
**dass** der Behälterkörper (9) zumindest eine Entlüftungsöffnung (10) aufweist und dass dieser Entlüftungsöffnung ein an die Entlüftungsöffnung (10) anlegbarer Schwimmkörper (12) zugeordnet ist.

2. Vorrichtung nach Anspruch 1, **dadurch gekennzeichnet, dass** die Entlüftungsöffnung (10) oberhalb einer Aufnahme (14) für den Schwimmkörper (12) zugeordnet ist.

3. Vorrichtung nach Anspruch 1 oder 2, **dadurch gekennzeichnet, dass** der Schwimmkörper (12) etwa kugelförmig ausgebildet ist.

4. Vorrichtung nach einem der vorhergehenden Ansprüche, **dadurch gekennzeichnet, dass** der Schwimmkörper (12) aus einem elastischen Material gefertigt ist.

5. Vorrichtung nach einem der vorhergehenden Ansprüche, **dadurch gekennzeichnet, dass** in das Innere des Behälterkörpers (9) flächige Prallabschnitte (13) vorstehen, welche Verengungen für die Flüssigkeit ausbilden.

6. Vorrichtung nach einem der vorhergehenden Ansprüche, **dadurch gekennzeichnet, dass** an die Entlüftungsöffnung (10) ein Leitungsabschnitt (11) angesetzt ist.

7. Vorrichtung nach Anspruch 5, **dadurch gekennzeichnet, dass** der Leitungsabschnitt (11) in einen Sammelbehälter (6) für die Flüssigkeit mündet.
